# FASCICULE DE BREVET EUROPEEN

(11) **EP 2 734 719 B1**
(45) Date de publication et mention de la délivrance du brevet: **09.09.2015**
(21) Numéro de dépôt: 12738576.3
(22) Date de dépôt: 06.07.2012
(51) Int. Cl.: F02C 6/10, F02C 9/18, F02C 6/08

(54) **SYSTEME ET PROCÉDÉ DE CONTROLE ET DE SURVEILLANCE D'UN AERONEF**
STEUERUNGS- UND ÜBERWACHUNGSSYSTEM FÜR FLUGZEUG SOWIE VERFAHREN
AIRCRAFT CONTROL AND MONITORING SYSTEM AND METHOD

(30) Priorité: 18.07.2011 FR 1156494
(43) Date de publication de la demande: 28.05.2014
(73) Titulaire: SNECMA, 75015 Paris (FR)
(72) Inventeur: SEBAA, Jérôme Guy, Roger, F-77550 Moissy-Cramayel Cedex (FR); BON, Fabrice, F-77550 Moissy-Cramayel Cedex (FR)
(74) Mandataire: Gevers France
(86) Numéro de dépôt international: PCT/FR2012/051596
(87) Numéro de publication internationale: WO 2013/011222

(56) Documents cités:
- EP-A1- 0 934 876
- EP-A2- 2 213 864
- WO-A1-2010/000691
- DE-A1-102006 023 498

## Description

L'invention concerne un système et un procédé de contrôle et de surveillance d'un aéronef, et plus particulièrement un système et un procédé de contrôle de température de prélèvements d'air et de surveillance du dépassement d'un seuil de température prédéfini dans un aéronef.

Un aéronef connu tel que, par exemple, un avion, comprend un fuselage dans lequel sont aménagés une cabine de pilotage et une cabine de passagers et au moins un groupe moteur. Un tel groupe moteur comprend un moteur et une soufflante au niveau desquels peuvent être effectués des prélèvements d'air. De tels prélèvements sont réalisés par un système, dit de prélèvement d'air, comprenant une pluralité vannes et un precooler. Ces vannes permettent le prélèvement d'air dans divers flux d'air circulant dans ou autour du moteur, par exemple un flux d'air à haute pression, à température élevée, prélevé au niveau du moteur, un flux d'air à pression intermédiaire, à température inférieure, prélevé aussi au niveau du moteur et un flux d'air de soufflante, froid, prélevé au niveau de la soufflante. Le flux d'air à haute pression et le flux d'air à pression intermédiaire peuvent être mélangés en un flux mixte fourni au precooler. Le precooler autorise alors un échange thermique entre le flux mixte et le flux d'air de soufflante permettant d'abaisser la température du flux mixte en sortie de precooler de sorte à fournir, par exemple à la cabine de pilotage ou à la cabine de passagers de l'aéronef, un flux à une température régulée. Une telle régulation est obtenue par le contrôle de l'ouverture d'une ou plusieurs des vannes de prélèvement du flux d'air. La température du flux d'air peut être régulée par la sélection d'une ou plusieurs vannes à contrôler, par exemple, par le contrôle de l'ouverture ou de la fermeture de la vanne de prélèvement du flux d'air de soufflante.

On connaît un système dans lequel, d'une part, un contrôle de la température est effectué dans le but de permettre l'ouverture ou la fermeture d'une ou plusieurs vannes et, d'autre part, une surveillance du dépassement d'un seuil de température prédéfini est réalisée dans le but de permettre la fermeture d'une ou plusieurs vannes, par exemple de prélèvement d'air chaud, ou l'ouverture d'une ou plusieurs vannes, par exemple de prélèvement d'air froid, en cas de dépassement dudit seuil. Un tel dépassement se produit, par exemple, lorsque la température d'air prélevé destiné à la cabine de pilotage est trop élevée, ce type d'incident étant classé comme catastrophique en terme de sûreté de l'aéronef

Un système connu de prélèvement d'air comprend un thermostat, connecté directement à une ou plusieurs vannes et permettant le contrôle de la température de prélèvements d'air sur la ou lesdites vannes, l'ouverture de la ou des vannes étant modulée par le signal du thermostat. Un tel thermostat induit cependant des imprécisions dans les mesures de température et donc, in extenso, dans leur contrôle.

Une solution existante consiste à placer un capteur de température pour mesurer la température du flux venant du precooler et remonter cette mesure à un calculateur de gestion du système de prélèvements d'air, dédié au système de prélèvements d'air. La mesure ainsi obtenue permet alors au calculateur d'effectuer à la fois le contrôle de la température de prélèvements d'air et la surveillance du dépassement d'un seuil de température prédéfini par la température des prélèvements d'air. L'utilisation d'une telle mesure induit cependant un problème de mode commun. En effet, comme le contrôle et la surveillance dépendent, dans un tel cas, simultanément de la même mesure de température, une mesure erronée implique à la fois un mauvais contrôle de la température de prélèvements d'air et une mauvaise surveillance du dépassement d'un seuil de température prédéfini de prélèvements d'air, ce qui présente un problème en terme de sûreté de l'aéronef.

On connait également le brevet DE 10 2006 023498 de la société Airbus Deutschland qui vise à résoudre un problème d'interruption de circuit de prélèvement d'air en cas de fuite. Il comporte un interrupteur thermique qui ferme une vanne mais ne propose pas de mode commun pour le contrôle de la température de prélèvements d'air et la surveillance du dépassement d'un seuil de température prédéfini par le flux d'air prélevé.

L'invention a pour but d'éliminer en partie ces inconvénients. A cet effet, elle concerne un système de prélèvements d'air d'un aéronef, ledit système comprenant :
- au moins une vanne de prélèvement d'air apte à prélever un flux d'air sur l'aéronef,
- un premier module d'information de température configuré pour déterminer et envoyer, sur un premier canal d'acquisition, une première information de température du flux d'air prélevé,
- un second module d'information de température configuré pour déterminer et envoyer, sur un second canal d'acquisition, une seconde information de température du flux d'air prélevé,
- au moins un module de gestion, couplé à un module de traitement de données et configuré pour :
   - recevoir, d'une part, sur le premier canal d'acquisition, la première information de température du flux d'air prélevé permettant un contrôle correspondant de vanne de prélèvement d'air et/ou, d'autre part, sur le second canal d'acquisition, la seconde information de température du flux d'air prélevé permettant la surveillance du dépassement d'un seuil de température prédéfini du flux d'air prélevé,
   - envoyer la première information de température et la seconde information de température,
- au moins un module de traitement de données, couplé au module de gestion, et configuré pour :
   - recevoir, sur un premier canal de traitement, la première information de température du flux d'air prélevé et autoriser un contrôle correspondant de vanne de prélèvement d'air,
   - recevoir, sur un second canal de traitement, la seconde information de température du flux d'air prélevé permettant la surveillance du dépassement d'un seuil de température prédéfini du flux d'air prélevé et autoriser la fermeture d'au moins une vanne de prélèvement d'air en cas de dépassement dudit seuil.

On entend ici par le terme « prélever un flux d'air sur l'aéronef » le fait de prélever de l'air dans un flux circulant, par exemple, au niveau de la soufflante ou du moteur de l'aéronef.

On entend par canal d'acquisition une voie de communication apte à permettre la transmission d'une information envoyée par un module d'information.

On entend par canal de traitement une voie de communication apte à permettre la transmission d'une information à destination d'un module de traitement, un canal de traitement pouvant être identique à, c'est-à-dire confondu avec, un canal d'acquisition.

On entend par information de température une mesure de la température ou un état de dépassement d'un seuil de température.

On entend par le terme « déterminer » mesurer une température ou établir un état de dépassement d'un seuil de température prédéfini par la température du flux d'air prélevé.

On entend par état de dépassement d'un seuil de température un résultat binaire ou booléen du type « seuil dépassé » ou « seuil non dépassé ». Un état peut être une valeur binaire ou se présenter, par exemple, sous la forme d'un discret.

On notera qu'un seuil peut être fixé à un instant donné mais peut être ultérieurement modifié, par exemple pour permettre le fonctionnement du module dans un mode dégradé.

Les informations de température reçues du module de gestion par le module de traitement de données peuvent ainsi comprendre, par exemple, une valeur correspondant à une mesure de température ou à un état de dépassement d'un seuil prédéfini de température.

Un tel système permet ainsi d'effectuer à la fois le contrôle de la température de prélèvements d'air et la surveillance du dépassement d'un seuil de température prédéfini de prélèvements d'air à partir de deux informations de température obtenues par deux canaux d'acquisition distincts. En d'autres termes, le premier module d'information permet d'acquérir une première information de température dans le but d'effectuer la fonction de contrôle tandis que le second module d'information permet d'acquérir une seconde information de température dans le but d'effectuer la fonction de surveillance. Il n'y a donc plus de mode commun entre le contrôle et la surveillance. De plus, le contrôle et la surveillance sont réalisés à partir d'informations de température précises telles que des mesures ou des états donnés de dépassement d'un seuil de température prédéfini.

Avantageusement, le système comprend une vanne de prélèvement d'air haute pression, une vanne de prélèvement d'air à pression intermédiaire, une vanne de prélèvement d'air de soufflante et un precooler, le flux d'air prélevé sur la vanne de prélèvement d'air haute pression étant mélangé au flux d'air prélevé sur la vanne de prélèvement d'air à pression intermédiaire pour obtenir un flux mixte en entrée du precooler, le precooler étant apte à refroidir ledit flux mixte par échange de chaleur avec le flux d'air prélevé sur la vanne de prélèvement d'air de soufflante.

De préférence, le premier module d'information de température est configuré pour mesurer et envoyer, sur le premier canal d'acquisition, une première mesure de température du flux d'air prélevé et le second module d'information de température est configuré pour mesurer et envoyer, sur le second canal d'acquisition, une seconde mesure de température du flux d'air prélevé ou pour déterminer et envoyer, sur le second canal d'acquisition, un état de dépassement d'un seuil de température prédéfini par la température du flux d'air prélevé.

Selon une caractéristique de l'invention, le module de gestion comprend :
- un module d'analyse configuré pour convertir la mesure de la température du flux d'air prélevé reçue en une valeur numérique et/ou pour comparer l'information sur la température dudit flux d'air prélevé reçue à une seuil prédéfini, et,
- un module d'envoi configuré pour envoyer la valeur numérique et/ou le résultat de la comparaison.

En particulier, le module de gestion peut être apte à convertir une mesure analogique de température reçue en une valeur digitale utilisable, par exemple, par un processeur ou par un Field-Programmable Gâte Array (FPGA).

Avantageusement, l'aéronef comprend un calculateur et le module de gestion et le module de traitement de données sont mis en oeuvre par ledit calculateur. Un calculateur comprend, de manière connue, des moyens informatiques configurés pour traiter des données et mettre en oeuvre des programmes d'ordinateur. Le calculateur peut être, par exemple, le calculateur moteur de l'avion qui est utilisé pour gérer des informations sur le fonctionnement du ou des moteurs de l'aéronef. L'utilisation du calculateur moteur de l'aéronef permet d'éviter l'utilisation d'un calculateur supplémentaire dédié à la gestion du système de prélèvements d'air de l'aéronef et donc d'effectuer le contrôle du système de prélèvements d'air de l'aéronef et du moteur de manière centralisée.

Selon une caractéristique de l'invention, le premier module d'information de température est configuré pour mesurer et envoyer, sur le premier canal d'acquisition, une première mesure de température du flux d'air prélevé, le second module d'information de température est configuré pour mesurer et envoyer, sur le second canal d'acquisition, une seconde mesure de température du flux d'air prélevé, et le module dé gestion est apte à recevoir, du premier module d'information de température, sur le premier canal d'acquisition, ladite première mesure et, du second module d'information de température, sur le second canal d'acquisition, ladite seconde mesure, le module de gestion étant couplé à un module de traitement et le premier et le second canal de traitement étant identiques.

Le premier module d'information permet ainsi d'acquérir une première mesure de température dans le but d'effectuer la fonction de contrôle tandis que le second module d'information permet d'acquérir une seconde mesure de température dans le but d'effectuer la fonction de surveillance. Les deux mesures étant envoyées dans ce cas, par l'unique module de gestion à un unique module de traitement reliés entre eux par un unique canal. Les deux informations de température sont ainsi séparées jusqu'au module de gestion.

Selon une caractéristique de l'invention, le système comprend en outre un second module de gestion couplé à un second module de traitement de données par un troisième et un quatrième canal de traitement identiques, et couplé, d'une part, au premier module d'information de température et, d'autre part, au second module d'information de température, le second module de gestion étant apte à recevoir, du premier module d'information de température, sur un troisième canal d'acquisition, la première mesure et, du second module d'information de température, sur un quatrième canal d'acquisition, la seconde mesure.

Une telle configuration permet, par exemple, de réunir, sur une première voie physique, par exemple d'un calculateur, le premier canal et le second canal, chacun remontant une mesure de température d'un module d'information de température différent (respectivement du premier et du second module d'information de température), et, sur une seconde voie physique, le premier canal et le second canal, chacun remontant une mesure de température d'un module d'information de température différent (respectivement du premier et du second module d'information de température). L'utilisation de deux voies physiques permet de dédoubler la fonction de gestion du module de gestion de sorte que si l'un des modules de gestion tombe en panne, l'autre permettra d'en assurer la fonction.

Selon une autre caractéristique de l'invention, le premier module d'information de température est configuré pour mesurer et envoyer, sur le premier canal d'acquisition, une première mesure de température du flux d'air prélevé, le second module d'information de température est configuré pour déterminer et envoyer, sur le second canal d'acquisition, un état de dépassement d'un seuil de température prédéfini par la température du flux d'air prélevé, et le module de gestion est configuré pour recevoir, sur le premier canal d'acquisition, la mesure de température et, sur le second canal d'acquisition, l'état de dépassement, le premier et le second canal de traitement étant identiques.

Le premier module d'information permet ainsi d'acquérir une mesure de température dans le but d'effectuer la fonction de contrôle tandis que le second module d'information permet d'acquérir un état de dépassement d'un seuil de température prédéfini dans le but d'effectuer la fonction de surveillance. Les deux informations étant envoyées dans ce cas, par l'unique module de gestion à un unique module de traitement reliés entre eux par un unique canal. Les deux informations de température sont ainsi séparées jusqu'au module de gestion.

Selon une autre caractéristique de l'invention, le premier module d'information de température est configuré pour mesurer et envoyer, sur le premier canal d'acquisition, une première mesure de température du flux d'air prélevé, le second module d'information de température est configuré pour déterminer et envoyer, sur le second canal d'acquisition, un état de dépassement d'un seuil de température prédéfini par la température du flux d'air prélevé, le module de gestion est configuré pour recevoir, sur le premier canal d'acquisition, la mesure de température et le module de traitement de données est configuré pour recevoir, sur le second canal d'acquisition, l'état de dépassement, le second canal d'acquisition et le second canal de traitement étant identiques.

Le premier module d'information permet ainsi d'acquérir une mesure de température dans le but d'effectuer la fonction de contrôle tandis que le second module d'information permet d'acquérir un état de dépassement d'un seuil de température prédéfini dans le but d'effectuer la fonction de surveillance. Dans ce cas, seule la mesure est envoyée à l'unique module de gestion, l'état étant envoyé directement par le second module d'information à l'unique module de traitement de données. Les deux informations de température sont ainsi séparées jusqu'au module de traitement de données.

Selon une autre caractéristique de l'invention, le premier module d'information de température est configuré pour mesurer et envoyer, sur le premier canal d'acquisition, une première mesure de température du flux d'air prélevé, le second module d'information de température est configuré pour déterminer et envoyer, sur le second canal d'acquisition, un état de dépassement d'un seuil de température prédéfini par la température du flux d'air prélevé, le module de gestion est configuré pour recevoir, sur le premier canal d'acquisition, la mesure de température et, sur le second canal d'acquisition, l'état de dépassement, le second canal d'acquisition et le second canal de traitement étant distincts.

Le premier module d'information permet ainsi d'acquérir une mesure de température dans le but d'effectuer la fonction de contrôle tandis que le second module d'information permet d'acquérir un état de dépassement d'un seuil de température prédéfini dans le but d'effectuer la fonction de surveillance. Dans ce cas, les deux informations de température sont envoyées à l'unique module de gestion, mais la mesure est envoyée à l'unique module de traitement de données sur un premier canal de traitement et l'état est envoyé à l'unique module de traitement de données sur un second canal de traitement, ce qui autorise la séparation des deux informations de température jusqu'au module de traitement de données.

Selon une autre caractéristique de l'invention, le système comprend un premier module de traitement de données configuré pour recevoir, sur le premier canal de traitement, la première information de température, et un second module de traitement de données configuré pour recevoir, sur le second canal de traitement, la seconde information de température.

Le contrôle de la température de prélèvements d'air et la surveillance du dépassement d'un seuil de température prédéfini de prélèvements d'air peuvent ainsi être séparés entre deux modules de traitement de données, c'est-à-dire, par exemple, entre deux calculateurs de l'aéronef, ce qui permet de sécuriser davantage l'aéronef étant donné que la panne de l'un des calculateurs n'entraîne la perte que de l'une des fonctions de contrôle ou de surveillance.

Selon une autre caractéristique de l'invention, le second module de traitement de données est configuré pour envoyer la seconde information de température au premier module de traitement de données. Cet état peut être envoyé directement ou, par exemple, via un module de communication.

Selon une autre caractéristique de l'invention, le système comprend en outre un troisième module de traitement de données configuré pour recevoir, sur un troisième canal de traitement, la première information de température.

Ceci permet, par dédoublement de l'un des modules de traitement, de sécuriser l'acquisition de la première information de température.

L'invention concerne aussi un procédé de gestion d'un système de prélèvements d'air dans un aéronef, ledit aéronef comprenant un système de prélèvements d'air d'un aéronef, ledit système comprenant :
- au moins une vanne de prélèvement d'air apte à prélever un flux d'air sur l'aéronef,
- un premier module d'information de température configuré pour déterminer et envoyer, sur un premier canal d'acquisition, une première information de température du flux d'air prélevé,
- un second module d'information de température configuré pour déterminer et envoyer, sur un second canal d'acquisition, une seconde information de température du flux d'air prélevé,
- au moins un module de gestion, couplé à un module de traitement de données et configuré pour :
   - recevoir, d'une part, sur le premier canal d'acquisition, la première information de température du flux d'air prélevé permettant un contrôle correspondant de vanne de prélèvement d'air et/ou, d'autre part, sur le second canal d'acquisition, la seconde information de température du flux d'air prélevé permettant la surveillance du dépassement d'un seuil de température prédéfini du flux d'air prélevé,
   - envoyer la première information de température et la seconde information de température,
- au moins un module de traitement de données, couplé au module de gestion, et configuré pour :
   - recevoir, sur un premier canal de traitement, la première information de température du flux d'air prélevé et autoriser un contrôle correspondant de vanne de prélèvement d'air,
   - recevoir, sur un second canal de traitement, la seconde information de température du flux d'air prélevé permettant la surveillance du dépassement d'un seuil de température prédéfini du flux d'air prélevé et autoriser la fermeture d'au moins une vanne de prélèvement d'air en cas de dépassement dudit seuil.
procédé comprenant les étapes de :
- on prélève un flux d'air au moins en partie sur la vanne,
- on reçoit, au niveau du module de gestion, du premier module d'information de température, la première information de température dudit flux d'air prélevé,
- on reçoit, au niveau du module de gestion ou du module de traitement de données, du second module d'information de température, la seconde information de température dudit flux d'air prélevé,
- on reçoit, au niveau du module de traitement de données, la première information de température et/ou la seconde information de température,
- on contrôle, au niveau du module de traitement de données, l'ouverture ou la fermeture d'une ou plusieurs vanne(s) prélèvement d'air en fonction de la première information de température et/ou de la seconde information de température.

Les caractéristiques et avantages de la présente invention apparaîtront plus clairement à la lecture de la description suivante d'une forme de réalisation de l'invention, donnée à titre d'exemple non limitatif, en référence aux dessins annexés correspondants (des références identiques portant sur des objets semblables) dans lesquels :
- la figure 1a illustre le système selon l'invention,
- la figure 1b illustre une première forme de réalisation du système selon l'invention,
- la figure 1c illustre une seconde forme de réalisation du système selon l'invention,
- la figure 2 illustre une troisième forme de réalisation du système selon l'invention,
- la figure 3 illustre une quatrième forme de réalisation du système selon l'invention,
- la figure 4 illustre une cinquième forme de réalisation du système selon l'invention,
- la figure 5 illustre une sixième forme de réalisation du système selon l'invention,
- la figure 6 illustre une septième forme de réalisation du système selon l'invention.

Le système selon l'invention est décrit ci-dessus en référence à des mesures de température ou des états de dépassement d'un seuil de température prédéfini. On notera cependant que la présente invention peut aussi s'appliquer à d'autres mesures, par exemple, à des mesures de pression ou des états de dépassement d'un seuil de pression prédéfini dans le but, identique, de contrôler l'ouverture et/ou la fermeture de vanne(s) du système de prélèvement d'air d'un aéronef.

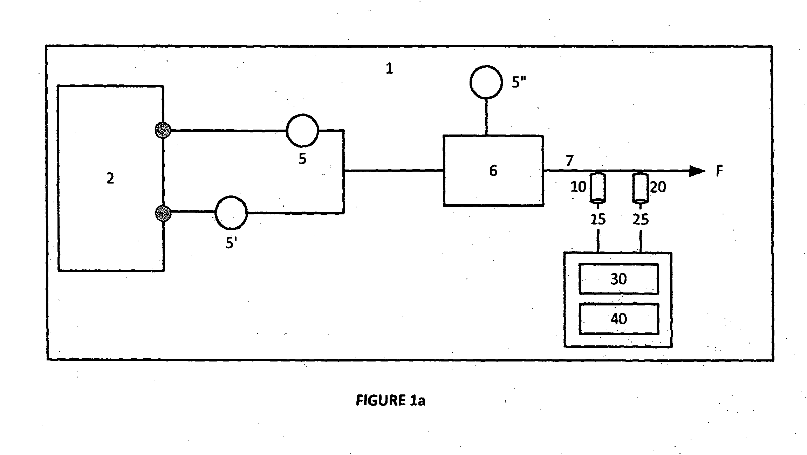

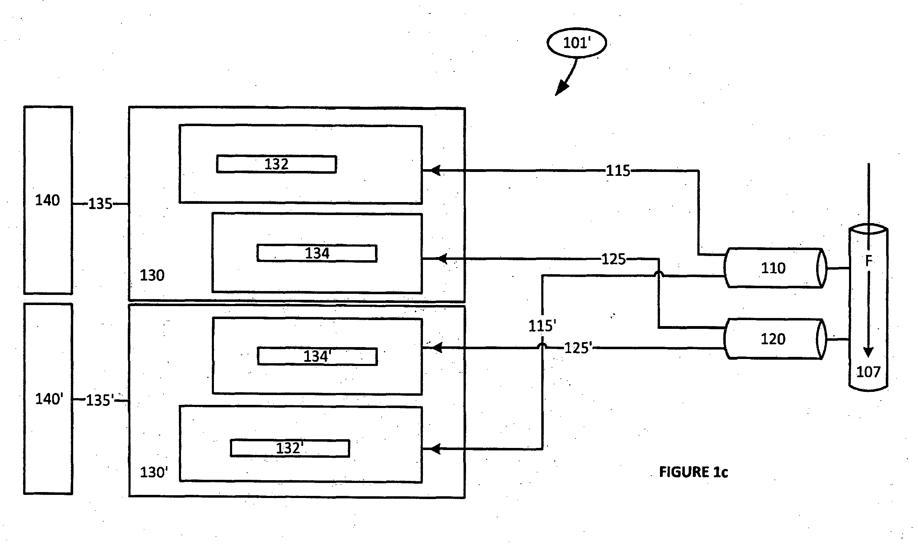

Le système 1 de prélèvements d'air d'un aéronef selon l'invention, illustré par la figure 1a, comprend deux vannes 5 et 5' de prélèvement d'air dans un flux d'air circulant au niveau d'un moteur 2 de l'aéronef et une vanne 5" de prélèvement d'air d'un flux circulant au niveau de la soufflante dudit moteur 2 de l'aéronef.

La vanne 5 peut être par exemple une vanne de prélèvement dans un flux d'air à pression intermédiaire prélevé au niveau du moteur tandis que la vanne 5' peut être par exemple une vanne de prélèvement dans un flux d'air à haute pression, de température supérieure et prélevé également au niveau du moteur. La vanne 5" permet de prélever un flux d'air froid directement au niveau de la soufflante, en amont du moteur 2 de l'aéronef.

Les flux d'air prélevés par les vannes 5, 5' de prélèvement d'air au niveau du moteur sont mélangés en un flux mixte en amont d'un precooler 6. Le precooler autorise un échange thermique entre le flux mixte et le flux d'air de soufflante permettant d'abaisser la température du flux mixte résultant F en sortie de precooler. Le flux mixte résultant F à température régulée est acheminé par un conduit 7, par exemple via un système de conditionnement d'air, vers la cabine de pilotage ou la cabine passager ou pour le dégivrage des ailes de l'aéronef.

Une telle régulation est obtenue par le contrôle de l'ouverture d'une ou plusieurs des vannes 5, 5', 5" de prélèvement du flux d'air. En particulier, la température du flux d'air peut être régulée par le contrôle de l'ouverture ou de la fermeture de la vanne 5" de prélèvement du flux d'air dé soufflante et/ou par la sélection de ou des vannes 5, 5', 5" à contrôler.

Le système 1 comprend en outre un premier module d'information de température 10, un second module d'information de température 20, au moins un module de gestion 30 et au moins un module de traitement de données 40 couplé au module de gestion 30.

Le premier module d'information de température 10 est configuré pour mesurer et envoyer, sur une premier canal d'acquisition 15, une première mesure de température du flux F d'air prélevé circulant dans le conduit 7.

Le second module d'information de température 20 est configuré pour mesurer et envoyer, sur un second canal d'acquisition 25, une seconde mesure de température du flux F d'air prélevé circulant dans le conduit 7 ou pour déterminer et envoyer, sur le second canal d'acquisition 25, un état de dépassement d'un seuil de température prédéfini par la température du flux F d'air prélevé circulant dans le conduit 7.

Le (ou les) module(s) de gestion 30 est couplé à au moins un module de traitement de données 40 et configuré pour envoyer audit module de traitement de données 40 des informations de température reçues du premier module d'information de température 10 et du second module d'information de température 20.

Le (ou les) module(s) de traitement de données 40 est couplé au module de gestion 30 et est configuré pour envoyer des commandes de contrôle d'ouverture ou de fermeture d'une ou des vannes 5, 5', 5" de prélèvement d'air en fonction des informations reçues du module de gestion 30 ou d'un module d'information de température (10,20).

Le module de traitement de données 40 peut comprendre ou être couplé à une mémoire (non représentée) configurée pour stocker des programmes d'ordinateurs. De tels programmes peuvent être aptes à permettre le traitement des informations de température et envoyer les commandes de d'ouverture et de fermeture de vannes 5, 5', 5" du système de prélèvement d'air de l'aéronef.

Par exemple, afin de réaliser la fonction de contrôle, le module de traitement de données 40 peut mesurer la différence entre une température reçue et une température de référence et autoriser un actionnement proportionnelle de l'une des vannes, par l'exemple, la vanne de prélèvement d'air de soufflante.

Similairement, par exemple, afin de réaliser la fonction de surveillance, le module de traitement de données 40 peut déterminer si une mesure reçue dépasse un seuil ou bien si un état reçu indique un dépassement pour autoriser un actionnement de fermeture de la vanne de prélèvement d'air de soufflante.

Ainsi, dans le système selon l'invention, le module de gestion permet notamment l'acquisition et le formatage des informations de température et le module de traitement de données permet l'analyse des informations de température reçues du module de gestion et l'actionnement éventuel d'une ou plusieurs des vannes du système de prélèvement d'air de l'aéronef. L'actionnement des vannes de prélèvement d'air peut être fait par le module de traitement 40 lui-même ou bien le module de traitement peut envoyer un message d'alerte à un autre module ou système, tel que par exemple un module de surveillance de la cabine de l'avion de sorte que le pilote puisse actionner manuellement par ailleurs l'actionnement d'une ou plusieurs vannes de prélèvement d'air.

Dans un mode de réalisation du système selon l'invention, les vannes 5, 5', 5" peuvent être contrôlées à distance par le module de traitement de données 40 ou par un autre module de l'aéronef, tel que par exemple un module de surveillance manuelle par un pilote. Dans un mode de réalisation alternatif, une vanne, par exemple la vanne de prélèvement d'air à pression intermédiaire, peut être indépendante et être, par exemple, une vanne pneumatique à ressort qui s'autorégule en fonction de la pression à ses bornes, le module de traitement de données étant alors apte à commander les deux autres vannes.

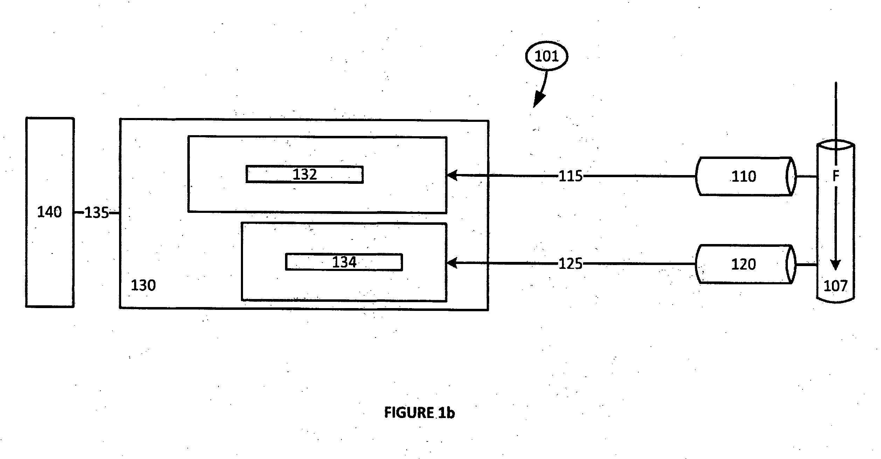

Dans une première forme de réalisation illustrée par la figure 1b, le système 101 comprend un premier module d'information de température 110, un second module d'information de température 120, un module de gestion 130 et un module de traitement de données 140.

Le premier module d'information de température 110 peut être, par exemple, une sonde de mesure de température. Le second module de température 120 peut être, par exemple, une seconde sonde de mesure ou bien un thermocouple, connus de l'homme du métier.

Le module de gestion 130 est couplé ou connecté, d'une part, au premier module d'information de température 110 et, d'autre part, au second module d'information de température 120.

Dans cette forme de réalisation, le premier module d'information de température 110 et le second module d'information de température 120 sont deux sondes de mesures de température. Le premier module d'information de température 110 et le second module d'information de température 120 sont ainsi configurés pour mesurer la température du flux F d'air prélevé circulant dans le conduit 107 du système de prélèvement d'air 101.

Le module de gestion 130 est apte à recevoir, de la première sonde de mesure 110, sur un premier canal d'acquisition 115, une première mesure M1 de température du flux d'air prélevé, et, de la seconde sonde de mesure 120, sur un second canal d'acquisition 125, une seconde mesure M2 de température du flux d'air prélevé.

Le module de gestion 130 comprend des moyens de contrôle de température 132 configurés pour fournir au module de traitement de données 140, par un canal de traitement 135, la mesure de température M1 fournie par le premier module d'information de température 110.

Le module de traitement de données 140 est configuré pour traiter la mesure M1 reçue et autoriser le contrôle d'une ou plusieurs vannes 5, 5', 5", c'est-à-dire leur fermeture ou ouverture, afin de permettre l'ajustement de la température du flux d'air F à une valeur souhaitée.

Le module de gestion 130 comprend en outre des moyens de surveillance 134 d'un état de dépassement d'un seuil de température prédéfini par la température du flux d'air prélevé. Ces moyens de surveillance 134 sont configurés pour fournir la seconde mesure M2, obtenue de la seconde sonde 120, au module de traitement de données 140 par le canal de traitement 135.

Le module de traitement de données 140 est configuré pour déterminer l'état de dépassement de seuil, c'est-à-dire si la température correspondant à la seconde mesure M2 a dépassé un seuil prédéterminé.

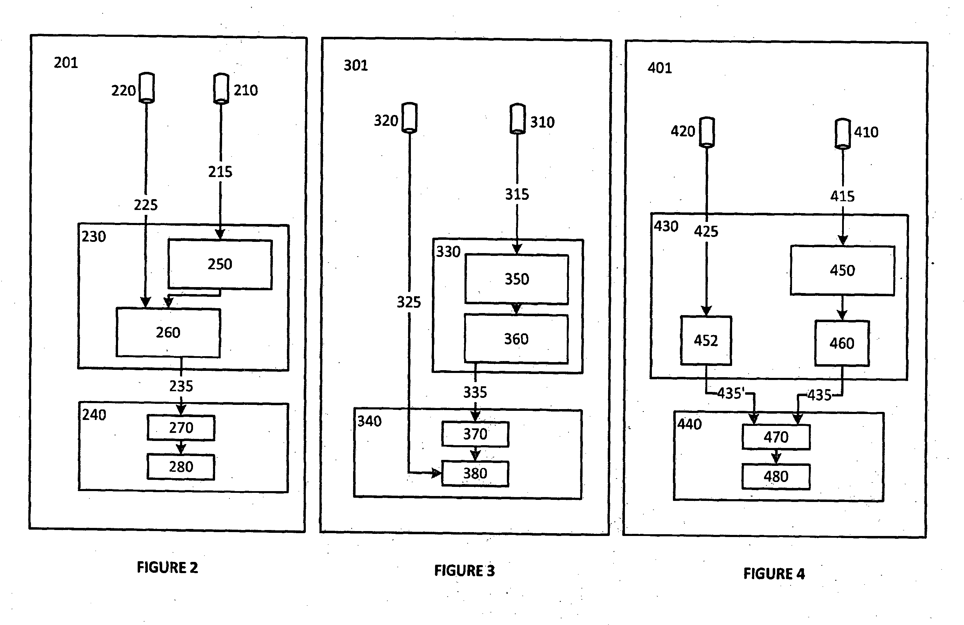

Dans une forme complémentaire de réalisation, illustrée par la figure 2b, de la première forme illustrée par la figure 2a, le système peut comprendre un second module de gestion 130', identique au module 130, et un second module de traitement de données 140', identique au module 140 et couplé au module de gestion 130', et un troisième canal d'acquisition 115' et un quatrième canal d'acquisition 125'. Les modules 130 et 140 et les moyens 132 et 134 sont ainsi dédoublés de même que les canaux d'acquisition 115 et 125.

Le premier module de gestion 130 est couplé ou connecté, d'une part, au premier module d'information de température 110 et, d'autre part, au second module d'information de température 120.

Le second module de gestion 130' couplé ou connecté, d'une part, par le troisième canal d'acquisition 115', au premier module d'information de température 110 et, d'autre part, par le quatrième canal d'acquisition 125', au second module d'information de température 120.

Dans cette forme de réalisation, le premier module d'information de température 110 et le second module d'information de température 120 sont deux sondes de mesures de température.

Le premier module de gestion 130 est apte à recevoir, de la première sonde de mesure 110, sur le premier canal d'acquisition 115, une première mesure M1 de température du flux d'air prélevé, et, de la seconde sonde de mesure 120, sur le second canal d'acquisition 125, une seconde mesure M2 de température du flux d'air prélevé.

Le second module de gestion 130' est apte à recevoir, de la première sonde de mesure 110, sur le troisième canal d'acquisition 115', la première mesure M1 de température du flux d'air prélevé, et, de la seconde sonde de mesure 120, sur le quatrième canal d'acquisition 125', la seconde mesure M2 de température du flux d'air prélevé.

Le premier module de gestion 130 comprend des moyens de contrôle de température 132 configurés pour fournir au module de traitement de données 140, par le canal de traitement 135, la mesure de température M1 fournie par le premier module d'information de température 110. Le module de traitement de données 140 traite alors la mesure reçue de sorte à permettre un contrôle de vanne de prélèvement d'air de l'aéronef afin d'ajuster la température du flux d'air F.

Le premier module de gestion 130 comprend aussi des moyens de surveillance 134 d'un état de dépassement d'un seuil de température prédéfini par la température du flux F d'air prélevé. Les moyens de surveillance 134 fournissent alors, par le canal de traitement 135, la seconde mesure M2, obtenue de la seconde sonde 120, au module de traitement de données 140 qui utilise alors, pour réaliser la fonction de surveillance, l'état de dépassement de seuil pour permettre, ou non, la commandes des vannes 5, 5', 5".

De même, le second module de gestion 130' comprend des moyens de contrôle de température 132' configurés pour fournir au module de traitement de données 140', par le canal de traitement 135', la mesure de température M1 fournie par le premier module d'information de température 110. Le module de traitement de données 140' traite alors la mesure reçue de sorte à permettre un contrôle de vanne de prélèvement d'air 5, 5', 5" de l'aéronef afin d'ajuster la température du flux d'air F.

Le second module de gestion 130' comprend aussi des moyens de surveillance 134' d'un état de dépassement d'un seuil de température prédéfini par la température du flux d'air prélevé. Les moyens de surveillance 134' fournissent alors, par le canal de traitement 135', la seconde mesure M2, obtenue de la seconde sonde 120, au module de traitement de données 140' qui utilise alors, pour réaliser la fonction de surveillance, l'état de dépassement de seuil pour permettre, ou non, la commandes des vannes 5, 5', 5".

Cette forme de réalisation du système selon l'invention permet donc de remonter les mesures de température M1 et M2 mesurées respectivement par les sondes 110 et 120 sur quatre canaux d'acquisition au lieu de deux. En d'autres termes, chaque mesure est remontée deux fois, par des canaux d'acquisition différents et à des modules de traitement de données différents. Une telle redondance des modules et des canaux permet de renforcer la sécurisation du contrôle et de la surveillance étant donné que la perte de l'un des modules n'entraîne pas la perte des deux mesures utiles aux fonctions de contrôle et de la surveillance qui subsistent sur l'autre module de gestion. Une telle architecture peut aisément être implémentée sur un calculateur de l'aéronef, par exemple un calculateur dit « moteur ». Un tel calculateur connu peut en effet comprendre deux modules de traitement de données communicant chacun sur une voie physique de communication de données. Les modules de gestion peuvent être installés sur le calculateur, couplés d'une part à leur module de traitement de données respectif, et reliés d'autre part chacun aux deux sondes par deux canaux. Les deux canaux reliés à une même sonde étant sur une même voie physique de communication du calculateur.

Les figures 2 à 6 illustrent cinq autres modes de réalisation du système selon l'invention mais, dans un but de clarification, les vannes et le flux F ne sont pas représentés. En outre, comme pour la forme de réalisation illustrée par la figure 2b en relation avec la forme de réalisation illustrée par la figure 2a, chacune des formes de réalisation illustrées par les figures 3 à 7 peuvent être dédoublées similairement, mutatis mutandis, dans un but de sécurisation du système. Ces formes dédoublées n'ont pas été représentées dans un souci de clarté.

Dans une troisième forme de réalisation illustrée par la figure 2, le système 201 comprend une sonde de mesure de température 210, un module d'information d'un état de dépassement de seuil de température 220, un module de gestion 230 et un module de traitement 240.

Le module de gestion 230 est connecté à la sonde de mesure 210 par un premier canal d'acquisition 215, d'une part, et au module d'information 220 par un second canal d'acquisition 225, d'autre part.

Le module de gestion 230 est configuré pour recevoir, sur le premier canal 215, une mesure de température du flux d'air prélevé, mesurée par la sonde de mesure de température 210 et, sur le second canal 225, un état de dépassement d'un seuil prédéfini de température du flux d'air prélevé, déterminé par le module d'information 220.

Le module de gestion 230 comprend un convertisseur analogique-digital 250 et un Field-Programmable Gate Array (FPGA) 260. Le convertisseur analogique-digital 250 est configuré pour convertir la mesure analogique de température reçue de la sonde de mesure de température 210 en une valeur digitale, de sorte qu'elle puisse être utilisée par des moyens de traitement tels qu'un Field-Programmable Gâte Array (FPGA) ou un processeur.

La valeur digitale ainsi obtenue est ensuite fournie au Field-Programmable Gâte Array (FPGA) 260 pour traitement. En particulier, le Field-Programmable Gâte Array (FPGA) 260 est configuré pour mettre en forme les signaux comprenant les valeurs digitales reçues du convertisseur analogique-digital 250 et des états reçus du module d'information 220 et détecter des pannes ou erreurs sur lesdits signaux.

L'état de dépassement d'un seuil prédéfini de température du flux d'air prélevé, déterminé par le module d'information 220, peut se présenter, par exemple, sous la forme d'un discret comprenant un circuit ou d'une valeur binaire ou booléenne. Par exemple l'état bas du discret (circuit ouvert) peut correspondre à une température du flux d'air supérieur au seuil, et l'état haut (circuit fermé) peut correspondra à un seuil non atteint, ou l'inverse. Un résultat binaire pourrait être, par exemple, un 0 ou 1 reçu par un bus digital d'un autre module d'information (un autre calculateur par ex.). Cet état de dépassement est fourni, par le module d'information 220, directement au Field-Programmable Gâte Array (FPGA) 260 pour traitement.

Le module de traitement de données 240 comprend un second Field-Programmable Gate Array (FPGA) 270 et un processeur 280. Le FPGA 260 communique, par un canal de traitement 235, avec le FPGA 270 couplé au processeur 280 pour que le processeur 280 traite les données reçues du module de gestion 230. En d'autres termes, le FPGA 270 assure, en particulier, la gestion des communications entre le module de gestion 230 et le processeur 280.

Dans une quatrième forme de réalisation illustrée par la figure 3, le système 301 comprend une sonde de mesuré de température 310, un module d'information d'un état de dépassement de seuil de température 320, un module de gestion 330 et un module de traitement de données 340.

Le module de gestion 330 est connecté à la sonde de mesure 310 par un premier canal d'acquisition 315 tandis que le module de traitement de données 340 est connecté au module d'information 320 par un second canal d'acquisition 325 qui est ici confondu avec un canal de traitement.

Le module de gestion 330 comprend un convertisseur analogique-digital 350 et un Field-Programmable Gâte Array (FPGA) 360. Le convertisseur analogique-digital 350 est configuré pour convertir la mesure analogique de température reçue de la sonde de mesure de température 310 en une valeur digitale, de sorte qu'elle puisse être utilisée par des moyens de traitement tels qu'un Field-Programmable Gâte Array (FPGA) ou un processeur. La valeur digitale ainsi obtenue est ensuite fournie au Field-Programmable Gâte Array (FPGA) 360 pour traitement. En particulier, le Field-Programmable Gâte Array (FPGA) 360 est configuré pour mettre en forme les signaux comprenant les valeurs digitales reçues du convertisseur analogique-digital 350 et détecter des pannes ou erreurs sur lesdits signaux.

Le module de traitement 340 comprend un Field-Programmable Gâte Array (FPGA) 370 et un processeur 380. Le Field-Programmable Gâte Array (FPGA) 360 communique la valeur digitale, par un canal de traitement 335, au Field-Programmable Gâte Array (FPGA) 370 couplé au processeur 380 pour que le processeur 380 traite les données reçues du module de gestion 330. Le FPGA 370 assure, en particulier, la gestion des communications entre le module de gestion 330 et le processeur 380.

L'état de dépassement d'un seuil prédéfini de température du flux d'air prélevé, déterminé par le module d'information 320, peut se présenter, par exemple, sous la forme d'un discret. Le module de traitement de données 340 est configuré pour recevoir du module d'information 320, sur le second canal d'acquisition 325, l'état de dépassement d'un seuil prédéfini de température du flux d'air prélevé. Dans cette forme de réalisation du système selon l'invention, cet état est fourni, par le module d'information 320, sur le second canal 325 qui est ici aussi un canal de traitement, directement au processeur 380 pour traitement.

Ainsi, la séparation des liens de communication entre la sonde 310 et le processeur 380 d'une part et entre le module d'information 320 et le processeur 380 d'autre part, permet de séparer les acquisitions jusqu'au processeur 380, c'est-à-dire de réduire le mode commun au seul processeur 380.

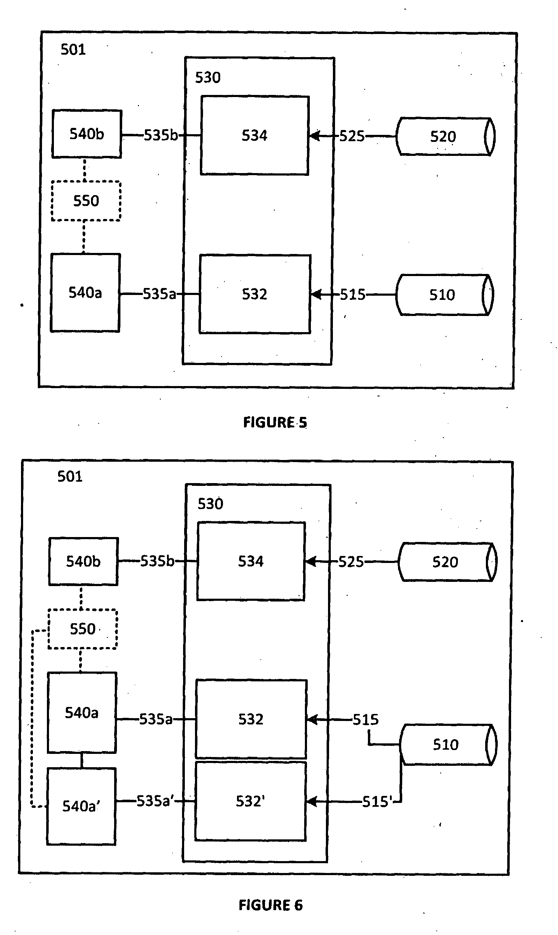

Dans une cinquième forme de réalisation illustrée par la figure 5, le système 401 comprend :
- une sonde de mesure de température 410,
- un module d'information d'un état de dépassement de seuil de température 420,
- un module de gestion 430,
- un module de traitement de données 440.

Le module de gestion 430 est connecté à la sonde de mesure 410 par un premier canal d'acquisition 415 tandis que le second module de gestion 430b est connecté au module d'information 420 par un second canal d'acquisition 425.

Le module de gestion 430 comprend un convertisseur analogique-digital 450 et un Field-Programmable Gâte Array (FPGA) 460.

Le convertisseur analogique-digital 450 est configuré pour recevoir de la sonde de mesure 410, sur le premier canal 415, une mesure de température du flux d'air prélevé mesurée par ladite sonde 410.

Le convertisseur analogique-digital 450 est en outre configuré pour convertir la mesure analogique de température reçue de la sonde de mesure de température 410 en une valeur digitale, de sorte qu'elle puisse être utilisée par des moyens de traitement tels qu'un Field-Programmable Gâte Array (FPGA) ou un processeur.

La valeur digitale ainsi obtenue est ensuite fournie au Field-Programmable Gâte Array (FPGA) 460 pour traitement. En particulier, le Field-Programmable Gâte Array (FPGA) 460 est configuré pour mettre en forme les signaux comprenant les valeurs digitales reçues du convertisseur analogique-digital 450 et détecter des pannes ou erreurs sur lesdits signaux.

Le Field-Programmable Gâte Array (FPGA) 460 permet le traitement des valeurs digitales reçues du convertisseur analogique-digital 450.

Le module de gestion 430 comprend également un second Field-Programmable Gate Array (FPGA) 452 configuré pour recevoir, du module d'information 420, un état de dépassement d'un seuil prédéfini de température du flux d'air prélevé. Un tel état se présente ici sous la forme d'un discret.

Le module de traitement 440 comprend un Field-Programmable Gâte Array (FPGA) 470 et un processeur 480.

Le Field-Programmable Gate Array (FPGA) 460 communique la valeur digitale de la mesure de température au Field-Programmable Gate Array (FPGA) 470 sur un premier canal de traitement 435.

Le Field-Programmable Gate Array (FPGA) 460 communique l'état de dépassement au second Field-Programmable Gate Array (FPGA) 452 sur un second canal de traitement 435' permettant la séparation totale de la mesure et de l'état jusqu'au FPGA 470.

Le FPGA 470 assure notamment la gestion des communications entre le module de gestion 430 et le processeur 480. Le FPGA 470 transmet ainsi la mesure ou l'état au processeur 480 pour traitement.

Dans cette forme de réalisation, la séparation des liens de communication entre la sonde 410 et le module de traitement 440 d'une part et entre le module d'information 420 et le module de traitement 440 d'autre part, permet de séparer les acquisitions jusqu'au module de traitement de données 440, c'est-à-dire de réduire le mode commun au seul module de traitement de données 440.

Dans une sixième forme de réalisation illustrée par la figure 5, le système 501 comprend :
- une sonde de mesure de température 510,
- un module d'information d'un état de dépassement de seuil de température 520,
- un module de gestion 530,
- un premier module de traitement de données 540a,
- un second module de traitement de données 540b.

Le module de gestion 530 est connecté, d'une part, par le canal d'acquisition 515 à la sonde de mesure 510 et, d'autre part, par le canal d'acquisition 525 au module d'information 520.

Le module de gestion 530 comprend un premier module de contrôle 532 configuré pour recevoir, de la sonde de mesure 510, sur un premier canal 515, une mesure M1 de température du flux F d'air prélevé mesurée et envoyée par ladite sonde 510.

Le module de contrôle 532 communique avec le premier module de traitement de données 540a par un canal de traitement 535a et est configuré pour envoyer audit premier module de traitement de données 540a la mesure M1 reçue.

Le premier module de traitement de données 540a traite alors la mesure M1 reçue de sorte à permettre le contrôle des vannes 5, 5', 5" du système 501, par exemple par l'envoi, direct ou indirect de commandes ou d'alertes de contrôles desdites vannes 5, 5', 5".

Le module de gestion 530 comprend en outre un module de surveillance 534 configuré pour recevoir des informations de température du module d'information 520.

Le module d'information 520 peut être ici, par exemple, une sonde de mesure de température ou un module d'information d'un état de dépassement d'un seuil prédéfini de température.

Les informations envoyées par le module d'information 520 et reçues par le module de surveillance 534 peuvent ainsi comprendre une mesure de température M2 ou un état de dépassement d'un seuil prédéfini de température tel que par exemple le résultat d'un discret, un résultat binaire, etc.

Le module de surveillance 534 est en outre couplé au second module de traitement de données 540b et est configuré pour envoyer audit second module de traitement de données 540b les informations de températures reçues.

Le second module de traitement de données 540b traite alors les données pour permettre la surveillance du dépassement d'un seuil de température prédéfini du flux d'air prélevé, par exemple par l'envoi, direct ou indirect de commandes ou d'alertes de contrôles des vannes de prélèvement d'air du système 501.

Dans cette forme de réalisation, le premier module de traitement de données 540a et le second module de traitement de données 540b peuvent être physiquement séparés et comprendre chacun un processeur.

Le premier module de traitement de données 540a et le second module de traitement de données 540b peuvent être couplés par un module de communication 550, par exemple de type Arinc®, de manière à permettre la communication entre eux.

Le premier module de traitement de données 540a peut, par exemple, être implémenté, c'est-à-dire mis en oeuvre, sur un calculateur moteur de l'aéronef et le second module de traitement de données 540b peut, par exemple, être implémenté sur un calculateur dédié, par exemple au système prélèvement d'air de l'aéronef, ou sur un autre calculateur moteur de l'aéronef.

Dans ce cas, le module de gestion 530 peut être physiquement scindé en deux de sorte que le module de contrôle 532 soit implémenté directement sur un calculateur moteur et que le module de surveillance 534 soit implémenté directement sur le second calculateur.

Dans cette forme de réalisation, la séparation des liens de communication entre la sonde 510 et le premier module de traitement de données 540a, d'une part, et entre le module d'information 520 et le second module de traitement de données 540b, d'autre part, permet de séparer les acquisitions intégralement et de faire ainsi disparaître complètement le mode commun entre les deux informations de température.

Alternativement, le second module de traitement de données 540b peut être configuré pour envoyer la seconde information de température au premier module de traitement de données 540a, par exemple, par le module de communication 550, de sorte que le premier module de traitement de données 540 effectue le traitement de la seconde information de température reçue et, par exemple, envoie des commandes de d'ouverture et de fermeture de vannes 5, 5', 5" du système de prélèvement d'air de l'aérônef. Dans ce cas, le contrôle de la température de prélèvements d'air et la surveillance du dépassement d'un seuil de température prédéfini de prélèvements d'air peuvent ainsi être effectués par le seul premier module de traitement de données 540a à partir de la première information qu'il reçoit du module de gestion 530 et de l'information de température qu'il reçoit du module de communication 550. Cela permet de séparer les acquisitions des deux informations de température par l'utilisation de deux modules de traitement de données séparés, par exemple, entre deux calculateurs de l'aéronef, et de sécuriser entre elles les informations utilisées par le module de traitement 540a, le mode commun étant ramené dans ce cas au seul module de traitement 540a.

Dans une septième forme de réalisation illustrée par la figure 6, le système 501 comprend en outre un troisième module de traitement de données 540a' et le module de gestion comprend en outre un second module de contrôle 532'.

Le second module de contrôle 532' est configuré pour recevoir, de la sonde de mesure 510, sur un troisième canal 515', la mesure M1 de température du flux F d'air prélevé mesurée et envoyée par ladite sonde 510.

Le module de contrôle 532' communique avec le troisième module de traitement de données 540a' par un canal de traitement 535a' et est configuré pour envoyer audit troisième module de traitement de données 540a' la mesure M1 reçue.

Le troisième module de traitement de données 540a' traite alors la mesure M1 reçue de sorte à permettre le contrôle des vannes 5, 5', 5" du système 501, par exemple par l'envoi, direct ou indirect de commandes de contrôles desdites vannes 5, 5', 5".

Le premier module de traitement de données 540a et le troisième module de traitement de données 540a' peuvent fonctionner en alternance, par exemple l'un étant principal et actif et l'autre secondaire et passif de sorte que si le module principal tombe en panne, le module secondaire puisse prendre le relais.

Dans cette forme de réalisation, le premier module de traitement de données 540a et le troisième module de traitement de données 540a' peuvent être, par exemple, implémentés sur un calculateur moteur de l'aéronef et le second module de traitement de données 540b peut, par exemple, être implémenté sur un calculateur dédié, par exemple au système prélèvement d'air de l'aéronef, ou sur un autre calculateur moteur de l'aéronef.

Dans ce cas, le module de gestion 530 peut être physiquement scindé en deux de sorte que les modules de contrôle 532 et 532' soient implémentés directement sur un calculateur moteur et que le module de surveillance 534 soit implémenté directement sur le second calculateur (dédié ou non).

Lorsque les modules de contrôle 532 et 532' sont implémentés sur un calculateur moteur comprenant deux voies physiques, les canaux 515 et 515' peuvent être physiquement implémentés respectivement sur la première voie physique et sur la seconde voie physique du calculateur moteur.

Dans cette forme de réalisation, la séparation des liens de communication entre la sonde 510 et le premier module de traitement de données 540a et le troisième module de traitement de données 540a', d'une part, et entre le module d'information 520 et le second module de traitement de données 540b, d'autre part, permet de séparer les acquisitions intégralement, faisant ainsi disparaître complètement le mode commun entre les deux informations de température, et de sécuriser l'acquisition de la première information de température pour réaliser la fonction de contrôle de température.

Alternativement, le second module de traitement de données 540b peut être configuré pour envoyer la seconde information de température au premier module de traitement de données 540a ou au troisième module de traitement de données 540a', par exemple, par le module de communication 550, de sorte que le premier module de traitement de données 540 ou le troisième traitement de données 540a' effectue le traitement de la seconde information de température reçue et, par exemple, envoie des commandes de d'ouverture et de fermeture de vannes 5, 5', 5" du système de prélèvement d'air de l'aéronef.

## Revendications

1. Système de prélèvements d'air d'un aéronef, ledit système (1, 101, 101', 201, 301, 401, 501) comprenant :
- au moins une vanne (5, 5', 5") de prélèvement d'air apte à prélever un flux (F) d'air sur l'aéronef,
- un premier module d'information de température (10, 110, 210, 310, 410, 510) configuré pour déterminer et envoyer, sur un premier canal d'acquisition (15, 115, 115', 215, 315, 415, 515, 515'), une première information de température du flux (F) d'air prélevé,
**caractérisé en ce qu'**il comprend en outre :
- un second module d'information de température (20, 120, 220, 320, 420, 520) configuré pour déterminer et envoyer, sur un second canal d'acquisition (25, 125, 125', 225, 325, 425, 525), une seconde information de température du flux (F) d'air prélevé,
- au moins un module de gestion (30, 130, 130', 230, 330, 430, 530), couplé à un module de traitement de données (40, 140, 140', 240, 340, 440, 540, 540a', 540b) et configuré pour :
- recevoir, d'une part, sur le premier canal d'acquisition (15, 115, 115', 215, 315, 415, 515, 515'), la première information de température du flux d'air prélevé permettant un contrôle correspondant de vanne (5, 5', 5") de prélèvement d'air et/ou, d'autre part, sur le second canal d'acquisition (25, 125, 125', 225, 325, 425, 525), la seconde information de température du flux (F) d'air prélevé permettant la surveillance du dépassement d'un seuil de température prédéfini du flux (F) d'air prélevé,
- envoyer la première information de température et la seconde information de température,
- au moins un module de traitement de données (40, 140, 140', 240, 340, 440, 540, 540a', 540b), couplé au module de gestion (30, 130, 130', 230, 330, 430, 530), et configuré pour :
- recevoir, sur un premier canal de traitement (135, 135', 235, 335, 435, 535a, 535a'), la première information de température du flux (F) d'air prélevé et autoriser un contrôle correspondant de vanne (5, 5', 5 ") de prélèvement d'air,
- recevoir, sur un second canal de traitement (135, 135', 235, 335, 435', 535b), la seconde information de température du flux (F) d'air prélevé permettant la surveillance du dépassement d'un seuil de température prédéfini du flux (F) d'air prélevé et autoriser la fermeture d'au moins une vanne (5, 5', 5") de prélèvement d'air en cas de dépassement dudit seuil.

2. Système de prélèvements d'air d'un aéronef selon la revendication 1, dans lequel le premier module d'information de température (10, 110, 210, 310, 410, 510) est configuré pour mesurer et envoyer, sur le premier canal d'acquisition (15, 115, 115', 215, 315, 415, 515, 515'), une première mesure de température du flux d'air prélevé et le second module d'information de température (20, 120, 220, 320, 420, 520) est configuré pour mesurer et envoyer, sur le second canal d'acquisition (25, 125, 125', 225, 325, 425, 525), une seconde mesure de température du flux d'air prélevé ou pour déterminer et envoyer, sur le second canal d'acquisition (25, 125, 125', 225, 325, 425, 525), un état de dépassement d'un seuil de température prédéfini par la température du flux (F) d'air prélevé.

3. Système de prélèvements d'air d'un aéronef selon l'une des revendications 1 et 2, dans lequel le premier module d'information de température (110) est configuré pour mesurer et envoyer, sur le premier canal d'acquisition (115), une première mesure de température du flux (F) d'air prélevé, le second module d'information de température (120) est configuré pour mesurer et envoyer, sur le second canal d'acquisition (125), une seconde mesure de température du flux (F) d'air prélevé, et le module de gestion (130) est apte à recevoir, du premier module d'information de température (110), sur le premier canal d'acquisition (115), ladite première mesure et, du second module d'information de température (120), sur le second canal d'acquisition (125), ladite seconde mesure, le module de gestion étant couplé à un module de traitement (140) et le premier et le second canal de traitement (135) étant identiques.

4. Système de prélèvements d'air d'un aéronef selon l'une des revendications précédentes, ledit système (101') comprenant en outre un second module de gestion (130') couplé à un second module de traitement de données (140') par un troisième et un quatrième canal de traitement (135') identiques et couplé, d'une part, au premier module d'information de température (110) et, d'autre part, au second module d'information de température (120), le second module de gestion (130') étant apte à recevoir, du premier module d'information de température (110), sur un troisième canal d'acquisition (115'), la première mesure et, du second module d'information de température (120), sur un quatrième canal d'acquisition (125'), la seconde mesure.

5. Système de prélèvements d'air d'un aéronef selon l'une des revendications 1 et 2, dans lequel le premier module d'information de température (210) est configuré pour mesurer et envoyer, sur le premier canal d'acquisition (215), une première mesure de température du flux (F) d'air prélevé, le second module d'information de température (220) est configuré pour déterminer et envoyer, sur le second canal d'acquisition (225), un état de dépassement d'un seuil de température prédéfini par la température du flux (F) d'air prélevé, et le module de gestion (230) est configuré pour recevoir, sur le premier canal d'acquisition (215), la mesure de température et, sur le second canal d'acquisition (225), l'état de dépassement, le premier et le second canal de traitement (235) étant identiques.

6. Système de prélèvements d'air d'un aéronef selon l'une des revendications 1 et 2, dans lequel le premier module d'information de température (310) est configuré pour mesurer et envoyer, sur le premier canal d'acquisition (315), une première mesure de température du flux (F) d'air prélevé, le second module d'information de température (320) est configuré pour déterminer et envoyer, sur le second canal d'acquisition (325), un état de dépassement d'un seuil de température prédéfini par la température du flux (F) d'air prélevé, le module de gestion (330) est configuré pour recevoir, sur le premier canal d'acquisition (315), la mesure de température et le module de traitement de données (340) est configuré pour recevoir, sur le second canal d'acquisition (325), l'état de dépassement, le second canal d'acquisition (325) et le second canal de traitement (325) étant identiques.

7. Système de prélèvements d'air d'un aéronef selon l'une des revendications 1 et 2, dans lequel le premier module d'information de température (410) est configuré pour mesurer et envoyer, sur le premier canal d'acquisition (415), une première mesure de température du flux (F) d'air prélevé, le second module d'information de température (420) est configuré pour déterminer et envoyer, sur le second canal d'acquisition (425), un état de dépassement d'un seuil de température prédéfini par la température du flux (F) d'air prélevé, le module de gestion (430) est configuré pour recevoir, sur le premier canal d'acquisition (415), la mesure de température et, sur le second canal d'acquisition (425), l'état de dépassement, le second canal d'acquisition (425) et le second canal de traitement (435') étant distincts.

8. Système de prélèvements d'air d'un aéronef selon l'une des revendications 1 et 2, dans lequel le système (501) comprend un premier module de traitement de données (540a) configuré pour recevoir, sur le premier canal de traitement (535a), la première information de température, et un second module de traitement de données (540b) configuré pour recevoir, sur le second canal de traitement (535b), la seconde information de température.

9. Système de prélèvements d'air d'un aéronef selon la revendication 8, ledit système (501) comprenant en outre un troisième canal d'acquisition (515') et un troisième module de traitement de données (540a') configuré pour recevoir, sur un troisième canal de traitement (535a'), la première information de température.

10. Procédé de gestion d'un système de prélèvements d'air dans un aéronef, ledit aéronef comprenant un système de prélèvements d'air, ledit système (1, 101, 101', 201, 301, 401, 501) comprenant :
- au moins une vanne de prélèvement d'air (5, 5', 5") apte à prélever un flux (F) d'air sur l'aéronef,
- un premier module d'information de température (10, 110, 210, 310, 410, 510) configuré pour déterminer et envoyer, sur un premier canal d'acquisition (15, 115, 115', 215, 315, 415, 515, 515'), une première information de température du flux (F) d'air prélevé,
- un second module d'information de température (20, 120, 220, 320, 420, 520) configuré pour déterminer et envoyer, sur un second canal d'acquisition (25, 125, 125', 225, 325, 425, 525), une seconde information de température du flux d'air prélevé,
- au moins un module de gestion (30, 130, 130', 230, 330, 430, 530), couplé à un module de traitement de données (40, 140, 140', 240, 340, 440, 540, 540a', 540b) et configuré pour :
- recevoir, d'une part, sur le premier canal d'acquisition (15, 115, 115', 215, 315, 415, 515, 515'), la première information de température du flux (F) d'air prélevé permettant un contrôle correspondant de vanne de prélèvement d'air (5, 5', 5 ") et/ou, d'autre part, sur le second canal d'acquisition (25, 125, 125', 225, 325, 425, 525), la seconde information de température du flux (F) d'air prélevé permettant la surveillance du dépassement d'un seuil de température prédéfini du flux (F) d'air prélevé,
- envoyer la première information de température et la seconde information de température,
- au moins un module de traitement de données (40, 140, 140', 240, 340, 440, 540, 540a', 540b), couplé au module de gestion (30, 130, 130', 230, 330, 430, 530), et configuré pour :
- recevoir, sur un premier canal de traitement (135, 135', 235, 335, 435, 535a, 535a'), la première information de température du flux d'air prélevé et autoriser un contrôle correspondant de vanne de prélèvement d'air (5, 5', 5 "),
- recevoir, sur un second canal de traitement (135, 135', 235, 335, 435', 535b), la seconde information de température du flux (F) d'air prélevé permettant la surveillance du dépassement d'un seuil de température prédéfini du flux (F) d'air prélevé et autoriser la fermeture d'au moins une vanne de prélèvement d'air (5, 5', 5") en cas de dépassement dudit seuil.
procédé comprenant les étapes de :
- on prélève un flux (F) d'air au moins en partie sur la vanne,
- on reçoit, au niveau du module de gestion (30, 130, 130', 230, 330, 430, 530), du premier module d'information de température (10, 110, 210, 310, 410, 510, 610), la première information de température dudit flux (F) d'air prélevé,
- on reçoit, au niveau du module de gestion (30, 130, 130', 230, 330, 430, 530) ou du module de traitement de données (40, 140, 140', 240, 340, 440, 540, 540a', 540b), du second module d'information de température (20, 120, 220, 320, 420, 520), la seconde information de température dudit flux (F) d'air prélevé,
- on reçoit, au niveau du module de traitement de données (40, 140, 140', 240, 340, 440, 540, 540a', 540b), la première information de température et/ou la seconde information de température,
- on contrôle, au niveau du module de traitement de données (40, 140, 140', 240, 340, 440, 540, 540a', 540b), l'ouverture ou la fermeture d'une ou plusieurs vanne(s) de prélèvement d'air (5, 5', 5") en fonction de la première information de température et/ou de la seconde information de température.

## Patentansprüche

1. System zur Entnahme von Luft eines Luftfahrzeugs, wobei das System (1, 101, 101', 201, 301, 401, 501) Folgendes umfasst:
- mindestens ein Luftentnahmeventil (5, 5', 5"), das geeignet ist, um einen Luftstrom (F) auf dem Luftfahrzeug zu entnehmen,
- ein erstes Temperaturinformationsmodul (10, 110, 210, 310, 410, 510), das konfiguriert ist, um auf einem ersten Erfassungskanal (15, 115, 115', 215, 315, 415, 515, 515') eine erste Temperaturinformation des entnommenen Luftstroms (F) zu bestimmen und zu senden,
**dadurch gekennzeichnet, dass** es ferner Folgendes umfasst:
- ein zweites Temperaturinformationsmodul (20, 120, 220, 320, 420, 520), das konfiguriert ist, um auf einem zweiten Erfassungskanal (25, 125, 125', 225, 325, 425, 525) eine zweite Temperaturinformation des entnommenen Luftstroms (F) zu bestimmen und zu senden,
- mindestens ein Verwaltungsmodul (30, 130, 130', 230, 330, 430, 530), das mit einem Datenverarbeitungsmodul (40, 140, 140', 240, 340, 440, 540, 540a', 540b) gekuppelt ist und konfiguriert ist, um:
- einerseits auf dem ersten Erfassungskanal (15, 115, 115', 215, 315, 415, 515, 515') die erste Temperaturinformation des entnommenen Luftstroms zu empfangen, die eine entsprechende Steuerung des Luftentnahmeventils (5, 5', 5") erlaubt, und/oder andererseits auf dem zweiten Erfassungskanal (25, 125, 125', 225, 325, 425, 525) die zweite Temperaturinformation des entnommenen Luftstroms (F), die die Überwachung des Überschreitens eines vorbestimmten Temperaturschwellenwerts des entnommenen Luftstroms (F) erlaubt,
- die erste Temperaturinformation und die zweite Temperaturinformation zu senden,
- mindestens ein Datenverarbeitungsmodul (40, 140, 140', 240, 340, 440, 540, 540a', 540b), das mit dem Verwaltungsmodul (30, 130, 130', 230, 330, 430, 530) gekuppelt und konfiguriert ist, um
- auf einem ersten Verarbeitungskanal (135, 135', 235, 335, 435, 535a, 535a') die erste Temperaturinformation des entnommenen Luftstroms (F) zu empfangen und eine entsprechende Steuerung des Luftentnahmeventils (5, 5', 5") zu gestatten,
- auf einem zweiten Verarbeitungskanal (135, 135', 235, 335, 435, 535) die zweite Temperaturinformation des entnommenen Luftstroms (F) zu empfangen, die das Überwachen des Überschreitens eines vorbestimmten Temperaturschwellenwerts des entnommenen Luftstroms (F) erlaubt und das Schließen mindestens eines Luftentnahmeventils (5, 5', 5") bei Überschreiten des Schwellenwerts erlaubt.

2. Luftentnahmesystem eines Luftfahrzeugs nach Anspruch 1, bei dem das erste Temperaturinformationsmodul (10, 110, 210, 310, 410, 510) konfiguriert ist, um auf dem ersten Erfassungskanal (15, 115, 115', 215, 315, 415, 515, 515') eine erste Temperaturmessung des entnommenen Luftstroms zu messen und zu senden, und das zweite Temperaturinformationsmodul (20, 120, 220, 320, 420, 520) konfiguriert ist, um auf dem zweiten Erfassungskanal (25, 125, 125', 225, 325, 425, 525) eine zweite Temperaturmessung des entnommenen Luftstroms zu messen und zu senden, oder um auf dem zweiten Erfassungskanal (25, 125, 125', 225, 325, 425, 525) einen Überschreitungszustand eines vorbestimmten Temperaturschwellenwerts durch die Temperatur des entnommenen Luftstroms (F) zu bestimmen und zu senden.

3. Luftentnahmesystem eines Luftfahrzeugs nach einem der Ansprüche 1 und 2, bei dem das erste Temperaturinformationsmodul (110) konfiguriert ist, um auf dem ersten Erfassungskanal (115) eine erste Temperaturmessung des entnommenen Luftstroms (F) zu messen und zu senden, das zweite Temperaturinformationsmodul (120) konfiguriert ist, um auf dem zweiten Erfassungskanal (125) eine zweite Temperaturmessung des entnommenen Luftstroms (F) zu messen und zu senden, und das Verwaltungsmodul (130) geeignet ist, um von dem ersten Temperaturinformationsmodul (110) auf dem ersten Erfassungskanal (115) die erste Messung zu empfangen und von dem zweiten Temperaturinformationsmodul (120) auf dem zweiten Erfassungskanal (125) die zweite Messung zu empfangen, wobei das Verwaltungsmodul (130) mit einem Verarbeitungsmodul (140) gekuppelt ist und der erste und der zweite Verarbeitungskanal (135) identisch sind.

4. Luftentnahmesystem eines Luftfahrzeugs nach einem der vorhergehenden Ansprüche, wobei das System (101') außerdem ein zweites Verwaltungsmodul (130') umfasst, das mit einem zweiten Datenverarbeitungsmodul (140') durch einen dritten und einen vierten Verarbeitungskanal (135') gekuppelt ist, die identisch sind und einerseits mit dem ersten Temperaturinformationsmodul (110) gekuppelt und andererseits mit dem zweiten Temperaturinformationsmodul (120) gekuppelt sind, wobei das zweite Verwaltungsmodul (130') geeignet ist, um von dem ersten Temperaturinformationsmodul (110) auf einem dritten Erfassungskanal (115') die erste Messung zu empfangen, und von dem zweiten Temperaturinformationsmodul (120) auf einem vierten Erfassungskanal (125') die zweite Messung zu empfangen.

5. Luftentnahmesystem eines Luftfahrzeugs nach einem der Ansprüche 1 und 2, bei dem das erste Temperaturinformationsmodul (210) konfiguriert ist, um auf dem ersten Erfassungskanal (215) eine erste Temperaturmessung des entnommenen Luftstroms (F) zu messen und zu senden, das zweite Temperaturinformationsmodul (220) konfiguriert ist, um auf dem zweiten Erfassungskanal (225) einen Überschreitungszustand eines vordefinierten Temperaturschwellenwerts durch die Temperatur des entnommenen Luftstroms (F) zu messen und zu senden, und das Verwaltungsmodul (230) konfiguriert ist, um auf dem ersten Erfassungskanal (215) die Temperaturmessung und auf dem zweiten Erfassungskanal (225) den Überschreitungszustand zu empfangen, wobei der erste und der zweite Verarbeitungskanal (235) identisch sind.

6. Luftentnahmesystem eines Luftfahrzeugs nach einem der Ansprüche 1 und 2, bei dem das erste Temperaturinformationsmodul (310) konfiguriert ist, um auf dem ersten Erfassungskanal (315) eine erste Temperaturmessung des entnommenen Luftstroms (F) zu messen und zu senden, das zweite Temperaturinformationsmodul (320) konfiguriert ist, um auf dem zweiten Erfassungskanal (325) einen Überschreitungszustand eines vordefinierten Temperaturschwellenwerts durch die Temperatur des entnommenen Luftstroms (F) zu bestimmen und zu senden, das Verwaltungsmodul (330) konfiguriert ist, um auf dem ersten Erfassungskanal (315) die Temperaturmessung zu empfangen, und das Datenverarbeitungsmodul (340) konfiguriert ist, um auf dem zweiten Erfassungskanal (325) den Überschreitungszustand zu empfangen, wobei der zweite Erfassungskanal (325) und der zweite Verarbeitungskanal (325) identisch sind.

7. Luftentnahmesystem eines Luftfahrzeugs nach einem der Ansprüche 1 und 2, bei dem das erste Temperaturinformationsmodul (410) konfiguriert ist, um auf dem ersten Erfassungskanal (415) eine erste Temperaturmessung des entnommenen Luftstroms (F) zu messen und zu senden, das zweite Temperaturinformationsmodul (420) konfiguriert ist, um auf dem zweiten Erfassungskanal (425) einen Überschreitungszustand eines vorbestimmten Temperaturschwellenwerts durch die Temperatur des entnommenen Luftstroms (F) zu bestimmen und zu senden, das Verwaltungsmodul (430) konfiguriert ist, um auf dem ersten Erfassungskanal (415) die Temperaturmessung zu empfangen, und auf dem zweiten Erfassungskanal (425) den Überschreitungszustand, wobei der zweite Erfassungskanal (425) und der zweite Verarbeitungskanal (435') unterschiedlich sind.

8. Luftentnahmesystem eines Luftfahrzeugs nach einem der Ansprüche 1 und 2, wobei das System (501) ein erstes Datenverarbeitungsmodul (540a) umfasst, das konfiguriert ist, um auf dem ersten Verarbeitungskanal (535a) die erste Temperaturinformation zu empfangen, und ein zweites Datenverarbeitungsmodul (540b), das konfiguriert ist, um auf dem zweiten Verarbeitungskanal (535b) die zweite Temperaturinformation zu empfangen.

9. Luftentnahmesystem eines Luftfahrzeugs nach Anspruch 8, wobei das System (501) außerdem einen dritten Erfassungskanal (515') und ein drittes Datenverarbeitungsmodul (540a') umfasst, das konfiguriert ist, um auf einem dritten Verarbeitungskanal (535a') die erste Temperaturinformation zu empfangen.

10. Verwaltungsverfahren eines Luftentnahmesystems eines Luftfahrzeugs, wobei das Luftfahrzeug ein Luftentnahmesystem umfasst, wobei das System (1, 101, 101', 201, 301, 401, 501) Folgendes umfasst:
- mindestens ein Luftentnahmeventil (5, 5', 5"), das geeignet ist, um einen Luftstrom (F) auf dem Luftfahrzeug zu entnehmen,
- ein erstes Temperaturinformationsmodul (10, 110, 210, 310, 410, 510), das konfiguriert ist, um auf einem ersten Erfassungskanal (15, 115, 115', 215, 315, 415, 515, 515') eine erste Temperaturinformation des entnommenen Luftstroms (F) zu bestimmen und zu senden,
- ein zweites Temperaturinformationsmodul (20, 120, 220, 320, 420, 520), das konfiguriert ist, um auf einem zweiten Erfassungskanal (25, 125, 125', 225, 325, 425, 525) eine zweite Temperaturinformation des entnommenen Luftstroms (F) zu bestimmen und zu senden,
- mindestens ein Verwaltungsmodul (30, 130, 130', 230, 330, 430, 530), das mit einem Datenverarbeitungsmodul (40, 140, 140', 240, 340, 440, 540, 540a', 540b) gekuppelt ist und konfiguriert ist, um:
- einerseits auf dem ersten Erfassungskanal (15, 115, 115', 215, 315, 415, 515, 515') die erste Temperaturinformation des entnommenen Luftstroms (F) zu empfangen, die eine entsprechende Steuerung des Luftentnahmeventils (5, 5', 5") erlaubt, und/oder andererseits auf dem zweiten Erfassungskanal (25, 125, 125', 225, 325, 425, 525) die zweite Temperaturinformation des entnommenen Luftstroms (F), die die Überwachung des Überschreitens eines vorbestimmten Temperaturschwellenwerts des entnommenen Luftstroms (F) erlaubt,
- die erste Temperaturinformation und die zweite Temperaturinformation zu senden,
- mindestens ein Datenverarbeitungsmodul (40, 140, 140', 240, 340, 440, 540, 540a', 540b), das mit dem Verwaltungsmodul (30, 130, 130', 230, 330, 430, 530) gekuppelt und konfiguriert ist, um
- auf einem ersten Verarbeitungskanal (135, 135"', 235, 335, 435, 535a, 535a') die erste Temperaturinformation des entnommenen Luftstroms zu empfangen und eine entsprechende Steuerung des Luftentnahmeventils (5, 5", 5") zu gestatten,
- auf einem zweiten Verarbeitungskanal (135, 135', 235, 335, 435, 535b) die zweite Temperaturinformation des entnommenen Luftstroms (F) zu empfangen, die das Überwachen des Überschreitens eines vorbestimmten Temperaturschwellenwerts des entnommenen Luftstroms (F) erlaubt, und das Schließen mindestens eines Luftentnahmeventils (5, 5', 5") bei Überschreiten des Schwellenwerts erlaubt,
Verfahren, das die folgenden Schritte umfasst:
- Entnahme eines Luftstroms (F) mindestens zum Teil auf dem Ventil,
- Empfang auf dem Niveau des Verwaltungsmoduls (30, 130, 130', 230, 330, 430, 530) des ersten Temperaturinformationsmoduls (10, 110, 210, 310, 410, 510, 610) der ersten Temperaturinformation des entnommenen Luftstroms (F),
- Empfang auf dem Niveau des Verwaltungsmoduls (30, 130, 130', 230, 330, 430, 530) oder des Datenverarbeitungsmoduls (40, 140, 140', 240, 340, 440, 540, 540a', 540b) des zweiten Temperaturinformationsmoduls (20, 120, 220, 320, 420, 520) der zweiten Temperaturinformation des entnommenen Luftstroms (F),
- Empfang auf dem Niveau des Datenverarbeitungsmoduls (40, 140, 140', 240, 340, 440, 540, 540a', 540b) der ersten Temperaturinformation und/oder der zweiten Temperaturinformation,
- Steuern auf dem Niveau des Datenverarbeitungsmoduls (40, 140, 14 0, 240, 340, 440, 540, 540a', 540b) des Öffnens oder des Schließens eines oder mehrerer Luftentnahmeventile (5, 5', 5") in Abhängigkeit von der ersten Temperaturinformation und/oder der zweiten Temperaturinformation.

## Claims

1. An air tapping system of an aircraft, said system (1, 101, 10, 201, 301, 401, 501) comprising:
- at least one air tapping valve (5, 5', 5") suitable for tapping an air flow (F) on the aircraft,
- a first temperature information module (10, 110, 210, 310, 410, 510) configured to determine and send, over a first acquisition channel (15, 1 15, 115 ', 215, 315, 415, 515, 515'), first tapped air flow (F) temperature information,
**characterized in that** it further comprises :
- a second temperature information module (20, 120, 220, 320, 420, 520) configured to determine and send, over a second acquisition channel (25, 125, 125', 225, 325, 425, 525), second tapped air flow (F) temperature information,
- at least one management module (30, 130, 130', 230, 330, 430, 530), coupled to a data processing module (40, 140, 140', 240, 340, 440, 540, 540a', 540b) and configured to:
- receive, on the one hand, over the first acquisition channel (15, 115, 115', 215, 315, 415, 515, 515'), the first tapped air flow temperature information allowing for a corresponding air tapping valve (5, 5', 5") control and/or, on the other hand, over the second acquisition channel (25, 125, 125', 225, 325, 425, 525), the second tapped air flow (F) temperature information making it possible to monitor the exceeding of a predefined tapped air flow (F) temperature threshold,
- send the first temperature information and the second temperature information,
- at least one data processing module (40, 140, 140', 240, 340, 440, 540, 540a', 540b), coupled to the management module (30, 130, 130', 230, 330, 430, 530), and configured to:
- receive, over a first processing channel (135, 135', 235, 335, 435, 535a, 535a'), the first tapped air flow (F) temperature information and allow a corresponding air tapping valve (5, 5', 5") control,
- receive, over a second processing channel (135, 135', 235, 335, 435', 535b), the second tapped air flow (F) temperature information making it possible to monitor the exceeding of a predefined tapped air flow (F) temperature threshold and allow the closure of at least one air tapping valve (5, 5', 5") in case said threshold is exceeded.

2. The air tapping system of an aircraft as claimed in claim 1, in which the first temperature information module (10, 110, 210, 310, 410, 510) is configured to measure and send, over the first acquisition channel (15, 115, 115', 215, 315, 415, 515, 515'), a first tapped air flow temperature measurement and the second temperature information module (20, 120, 220, 320, 420, 520) is configured to measure and send, over the second acquisition channel (25, 125, 125', 225, 325, 425, 525), a second tapped air flow temperature measurement or to determine and send, over the second acquisition channel (25, 125, 125', 225, 325, 425, 525), a status of exceeding of a predefined temperature threshold by the temperature of the tapped air flow (F).

3. The air tapping system of an aircraft as claimed in one of claims 1 and 2, in which the first temperature information module (110) is configured to measure and send, over the first acquisition channel (115), a first tapped air flow (F) temperature measurement, the second temperature information module (120) is configured to measure and send, over the second acquisition channel (125), a second tapped air flow (F) temperature measurement, and the management module (130) is suitable for receiving, from the first temperature information module (110), over the first acquisition channel (115), said first measurement and, from the second temperature information module (120), over the second acquisition channel (125), said second measurement, the management module being coupled to a processing module (140) and the first and the second processing channels (135) being identical.

4. The air tapping system of an aircraft as claimed in one of the preceding claims, said system (101') also comprising a second management module (130') coupled to a second data processing module (140') by a third and a fourth identical processing channels (135') and coupled, on the one hand, to the first temperature information module (110) and, on the other hand, to the second temperature information module (120), the second management module (130') being suitable for receiving, from the first temperature information module (110), over a third acquisition channel (115'), the first measurement and, from the second temperature information module (120), over a fourth acquisition channel (125'), the second measurement.

5. The air tapping system of an aircraft as claimed in one of claims 1 and 2, in which the first temperature information module (210) is configured to measure and send, over the first acquisition channel (215), a first tapped air flow (F) temperature measurement, the second temperature information module (220) is configured to determine and send, over the second acquisition channel (225), a status of exceeding of a predefined temperature threshold by the temperature of the tapped air flow (F), and the management module (230) is configured to receive, over the first acquisition channel (215), the temperature measurement and, over the second acquisition channel (225), the exceeding status, the first and the second processing channels (235) being identical.

6. The air tapping system of an aircraft as claimed in one of claims 1 and 2, in which the first temperature information module (310) is configured to measure and send, over the first acquisition channel (315), a first tapped air flow (F) temperature measurement, the second temperature information module (320) is configured to determine and send, over the second acquisition channel (325), a status of exceeding of a predefined temperature threshold by the temperature of the tapped air flow (F), the management module (330) is configured to receive, over the first acquisition channel (315), the temperature measurement, and the data processing module (340) is configured to receive, over the second acquisition channel (325) the exceeding status, the second acquisition channel (325) and the second processing channel (325) being identical.

7. The air tapping system of an aircraft as claimed in one of claims 1 and 2, in which the first temperature information module (410) is configured to measure and send, over the first acquisition channel (415), a first tapped air flow (F) temperature measurement, the second temperature information module (420) is configured to determine and send, over the second acquisition channel (425), a status of exceeding of a predefined temperature threshold by the temperature of the tapped air flow (F), the management module (430) is configured to receive, over the first acquisition channel (415), the temperature measurement and, over the second acquisition channel (425), the exceeding status, the second acquisition channel (425) and the second processing channel (435') being distinct.

8. The air tapping system of an aircraft as claimed in one of claims 1 and 2, in which the system (501) comprises a first data processing module (540a) configured to receive, over the first processing channel (535a), the first temperature information, and a second data processing module (540b) configured to receive, over the second processing channel (535b), the second temperature information.

9. The air tapping system of an aircraft as claimed in claim 8, said system (501) also comprising a third acquisition channel (515') and a third data processing module (540a') configured to receive, over a third processing channel (535a'), the first temperature information.

10. A method for managing an air tapping system in an aircraft, said aircraft comprising an air tapping system, said system (1, 101, 10, 201, 301, 401, 501) comprising:
- at least one air tapping valve (5, 5', 5") suitable for tapping an air flow (F) on the aircraft,
- a first temperature information module (10, 110, 210, 310, 410, 510) configured to determine and send, over a first acquisition channel (15, 115, 115', 215, 315, 415, 515, 515'), first tapped air flow (F) temperature information,
- a second temperature information module (20, 120, 220, 320, 420, 520) configured to determine and send, over a second acquisition channel (25, 125, 125', 225, 325, 425, 525), second tapped air flow temperature information,
- at least one management module (30, 130, 130', 230, 330, 430, 530), coupled to a data processing module (40, 140, 140', 240, 340, 440, 540, 540a', 540b) and configured to:
- receive, on the one hand, over the first acquisition channel (15, 115, 115', 215, 315, 415, 515, 515'), the first tapped air flow (F) temperature information allowing for a corresponding air tapping valve (5, 5', 5") control and/or, on the other hand, over the second acquisition channel (25, 125, 125', 225, 325, 425, 525), the second tapped air flow (F) temperature information making it possible to monitor the exceeding of a predefined tapped air flow (F) temperature threshold,
- send the first temperature information and the second temperature information,
- at least one data processing module (40, 140, 140', 240, 340, 440, 540, 540a', 540b), coupled to the management module (30, 130, 130', 230, 330, 430, 530), and configured to:
- receive, over a first processing channel (135, 135', 235, 335, 435, 535a, 535a'), the first tapped air flow temperature information and allow for a corresponding air tapping valve (5, 5', 5") control,
- receive, over a second processing channel (135, 135', 235, 335, 435', 535b), the second tapped air flow (F) temperature information making it possible to monitor the exceeding of a predefined tapped air flow (F) temperature threshold and allow for the closure of at least one air tapping valve (5, 5', 5") in case said threshold is exceeded,
the method comprising the steps of:
- tapping a flow (F) of air at least partly on the valve,
- receiving, on the management module (30, 130, 130', 230, 330, 430, 530), from the first temperature information module (10, 110, 210, 310, 410, 510, 610), the first temperature information of said tapped air flow (F),
- receiving, on the management module (30, 130, 130', 230, 330, 430, 530) or the data processing module (40, 140, 140', 240, 340, 440, 540, 540a', 540b), from the second temperature information module (20, 120, 220, 320, 420, 520), the second temperature information of said tapped air flow (F),
- receiving, on the data processing module (40, 140, 140', 240, 340, 440, 540, 540a', 540b), the first temperature information and/or the second temperature information,
- controlling, on the data processing module (40, 140, 140', 240, 340, 440, 540, 540a', 540b), the opening or the closing of one or more air tapping valves (5, 5', 5") as a function of the first temperature information and/or of the second temperature information.
